(19) Europäisches Patentamt
European Patent Office
Office européen des brevets

(11) EP 1 359 481 A1

(12) **EUROPEAN PATENT APPLICATION**
published in accordance with Art. 158(3) EPC

(43) Date of publication:
**05.11.2003 Bulletin 2003/45**

(21) Application number: **02710486.8**

(22) Date of filing: **04.02.2002**

(51) Int Cl.$^7$: **G05B 13/02**, G06N 1/00, G06N 3/00

(86) International application number:
**PCT/JP02/00878**

(87) International publication number:
**WO 02/063402 (15.08.2002 Gazette 2002/33)**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **05.02.2001 JP 2001028758**
**05.02.2001 JP 2001028759**

(71) Applicant: **Honda Giken Kogyo Kabushiki Kaisha**
**Minato-ku, Tokyo 107-8556 (JP)**

(72) Inventors:
- **KOSHIZEN, Takamasa**
**Wako-shi, Saitama 351-0193 (JP)**
- **TSUJINO, Hiroshi**
**Wako-shi, Saitama 351-0193 (JP)**

(74) Representative: **Rupp, Christian, Dipl.Phys. et al**
**Mitscherlich & Partner**
**Patent- und Rechtsanwälte**
**Sonnenstrasse 33**
**80331 München (DE)**

# (54) AGENT LEARNING APPARATUS, METHOD, AND PROGRAM

(57) An agent learning apparatus comprises a sensor (301) for acquiring a sense input, an action controller (307) for creating an action output in response to the sense input and giving the action output to a controlled object, an action state evaluator (303) for evaluating the behavior of the controlled object, a selective attention mechanism (304) for storing the action output and the sense input corresponding to the action output in one of the columns according to the evaluation, calculating a probability model from the action outputs stored in the columns, and outputting, as a learning result, the action output related to a newly given sense input in the column where the highest confidence obtained by applying the newly given sense input to the probability model is stored. By thus learning, the selective attention mechanism (304) obtains a probability relationship between the sense input and the column. An action output is calculated on the basis of the column evaluated as a stable column. As a result, the dispersion of the action output is quickly minimized, and thereby the controlled object can be stabilized.

FIG. 4

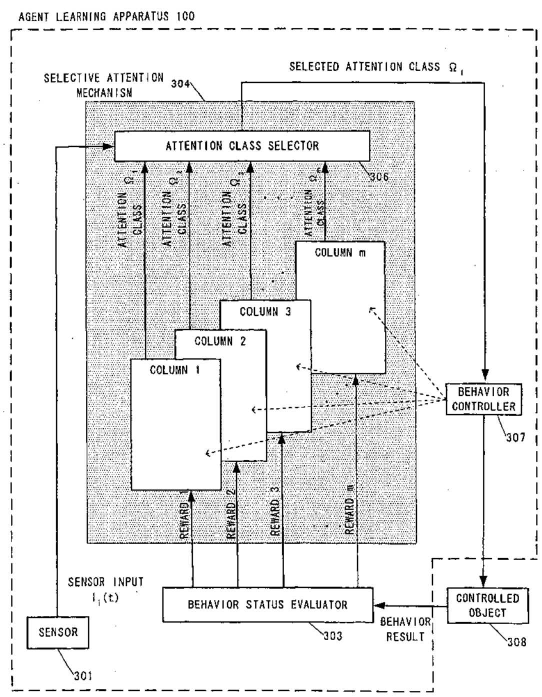


EP 1 359 481 A1

## Description

### Technical Field

The invention relates to an agent learning apparatus, method and program. More specifically, the invention relates to an agent learning apparatus, method and program for implementing the rapid and highly adaptive control for non-linear or non-stationary targets or physical system control such as industrial robots, automobiles, and airplanes with high-order cognitive control mechanism.

### Background Art

Examples of the conventional learning scheme include a supervised learning scheme for minimizing an error between model control path by the time-series representation given by an operator and predicted path (Gomi. H. and Kawato. M., Neural Network Control for a Closed-Loop System Using Feedback-Error-Learning, Neural Networks, Vol. 6, pp.933-946, 1933). Another example is a reinforcement learning scheme, in which optimal path is acquired by iterating try and error process in given environment for control system without model control path (Doya. K., Reinforcement Learning In Continuous Time and Space, Neural Computation, 2000).

However, since the environment surrounding the control system is changing constantly in real world, it is difficult for the operator to keep giving model control path to the control system and therefore such a supervised learning scheme cannot be applied. In the latter learning scheme, there is a problem that it takes much time for the control system to acquire the optimal path by iterating try and error process. Thus, it is difficult to employ the aforementioned learning schemes for controlling an object (e.g. a helicopter) which requires to be controlled rapidly and precisely responsive to the environment.

On the other hand, recent research on human control mechanism proves that the human control mechanism focuses on time-series "smoothness" of behavior outputs determined by non-linear approximations of control system based on sensory inputs and symmetric nature of behavior outputs in statistical normal distribution, and acquires control path statistically and very rapidly for minimizing the variance of the behavior outputs by selecting the sensory inputs to be paid attention (Harris. M. C., Signal-dependent noise determines motor planning, Nature, Vol. 394, 20 August, 1998).

In the cognitive science field, it is considered that human being has a mechanism to realize rapid and efficient control by consciously selecting necessary information out of massive sensory information. It has been suggested that this mechanism should be applied to engineering, but no concrete model has been proposed to apply this mechanism to engineering.

Therefore, it is an objective of the invention to provide an agent learning apparatus, method and program for acquiring optimal control path rapidly.

### Disclosure of Invention

According to the invention, a selective attention mechanism is devised for creating non-observable information (attention classes) by learning and for associating sensory inputs with the attention classes. With this mechanism, optimal control path for minimizing the variance of the behavior outputs may be acquired rapidly.

An agent learning apparatus according to the invention comprises a sensor for capturing external environmental information for conversion to sensory inputs, and a behavior controller for supplying behavior outputs to a controlled object based on results of learning performed on said sensory inputs. The apparatus further comprises a behavior status evaluator for evaluating behavior of the controlled object caused by said behavior outputs. The apparatus further comprises a selective attention mechanism for storing said behavior outputs in one of a plurality of columns in association with corresponding sensory inputs based on the evaluation, computing probabilistic models based on the behavior outputs stored in said columns, and outputting behavior outputs in association with newly given sensory inputs in the column as said results of learning. The column has largest confidence calculated by applying said newly given sensory inputs to said probabilistic models.

By such configuration, the agent learning apparatus may be applied to initiate controlling an object without advance learning. In this case, the instability of controlled object is large before computing the probabilistic models and the object may be damaged or so by unexpected motion of the object. Therefore, range of behavior outputs given to the object by the behavior controller is preferably limited forcefully for a predetermined period.

Instead of selecting a column having largest confidence for a given sensory input, a column containing the behavior outputs having largest evaluation by the behavior status evaluator may be always selected and a behavior output in association with newly given sensory inputs in that column may be outputted.

The computing probabilistic model comprises representing behavior outputs stored in columns as normal distribution by using Expectation Maximization algorithm, using said normal distribution to compute a priori probability that a behavior output is contained in each column, and using said a priori probability to compute said probabilistic model by supervised learning with neural network. The probabilistic model is probabilistic relationship between any sensory input and each column. Specifically, the probabilistic model may be conditional probabilistic density function $p(I_i(t) \mid \Omega_1)$.

The confidence may be calculated by applying the a priori probability and the probabilistic model to Bayes' rule. The confidence is the probability that a sensory input belongs to each attention class (column).

As described above, controlling the object may be initiated without advance learning. However, it is preferable that data sets of relationship between sensory inputs and behavior outputs are prepared and probabilistic models are computed in advance by performing advance learning with the data sets. After computing the probabilistic models, confidence is calculated using the probabilistic model for newly given sensory inputs. In this case, probabilistic models same with those computed in advance learning stage are continued to be used. Therefore, the object may be stabilized more rapidly. When performing advance learning, sensory inputs are converted into behavior outputs by a behavior output generator based on the data sets and supplied to the object.

Brief Description of Drawings

Fig. 1 shows a graph of an exemplary time-series data of behavior outputs;
Fig. 2 shows a histogram of the time-series data in Fig. 1;
Fig. 3 shows a functional block diagram of an agent learning apparatus in advance learning stage according to the invention;
Fig. 4 shows a functional block diagram of an agent learning apparatus in behavior control stage according to the invention;
Fig. 5 is a flowchart illustrating operation of the agent learning apparatus in advance learning stage;
Fig. 6 is an example of a normal distribution curved surface showing relationship between sensory inputs and behavior outputs, which are stored in the column corresponding to "stable" reward;
Fig. 7 is an example of a normal distribution curved surface showing relationship between sensory inputs and behavior outputs, which are stored in the column corresponding to "unstable" reward;
Fig. 8 shows an example of hierarchical neural network for learning the relationship between sensory inputs and attention class;
Fig. 9 is a flowchart illustrating operation of the agent learning apparatus in behavior control stage;
Fig. 10 shows configuration of helicopter control system according to the invention;
Fig. 11 shows learning result of relationship between visual sensory inputs and attention class in the system shown in Fig. 10; and
Fig. 12 shows a graph of the variance of the behavior outputs for the controlled helicopter over time when the control is executed in Fig. 6.

Best Mode for Carrying Out the Invention

First, preliminary experiment is described using a radio-controlled helicopter (hereinafter simply referred to as a "helicopter") shown in Fig. 10, which will be described later.

Fig. 1 is a graph of the time-series data on outputs of control motor for the helicopter acquired every 30 milliseconds when the helicopter was operated to maintain stability. Fig. 2 is a histogram of that data. As shown in Fig. 2, control outputs for stabilizing the helicopter (hereinafter referred to as "behavior output") may be represented in a normal distribution curve.

To realize a stable control for various controlled objects, attention should be paid on symmetric nature of such normal distribution of the behavior outputs of the controlled objects. This is because most frequent behavior outputs on the normal distribution may be expected to be heavily used for realizing stability of the controlled object. Therefore, through the use of the symmetric nature of the normal distribution, behavior outputs to be supplied to the controlled object under ever-changing environment may be statistically predicted.

When selecting behavior outputs supplied to the controlled object based on sensory inputs captured by a sensor or the like, the number of selectable behavior outputs may be unlimited. However, if learning is performed such that the variance of behavior result of the controlled object caused by supplied behavior output (hereinafter simply referred to as "behavior result") is decreased over time, the range of selectable behavior outputs based on the captured sensory inputs come to be limited, and resultantly the controlled object will be stabilized. In other words, by minimizing the variance for a normal distribution of behavior outputs, stable control with lowest width or rate of fluctuation is realized.

The agent learning apparatus according to the invention is characterized in that both statistical learning schemes based on such preliminary experiment and conventional supervised learning scheme are employed synthetically. Now, preferable embodiments of the invention will be described with reference to Figs. 1 to 12.

The agent learning apparatus 100 according to the invention performs learning with prepared data sets, for example. Such process is referred to as "advance learning stage" herein. Fig. 3 shows a functional block diagram of an agent learning apparatus 100 according to one embodiment of the invention in advance learning stage. The agent learning apparatus 100 is illustrated in the area enclosed with dotted lines in Fig. 3, including one or more sensors 301, a behavior output generator 302, a behavior status evaluator 303 and a selective attention mechanism 304. The selective attention mechanism 304 includes a plurality of columns 1, 2, 3,...,m created according to rewards produced by the behavior status evaluator 303. The selective attention mechanism 304 also includes an attention class selector 306.

To the sensory inputs captured by the sensor 301, the behavior output generator 302 generates behavior outputs based on the data sets and supplies them to a controlled object 308. The behavior status evaluator 303 evaluates the behavior result of the controlled object 308 to generate rewards for behavior outputs one by one. The selective attention mechanism 304 distributes the behavior outputs to one of columns according to each reward to create probabilistic models described later. Creating probabilistic models -in advance enables high-accurate control.

After the advance learning stage is completed, the agent learning apparatus 100 performs a process which is referred to as "behavior control stage" herein.

Fig. 4 shows a functional block diagram of an agent learning apparatus 100 according to one embodiment of the invention in behavior control stage. In behavior control stage, new sensory inputs captured by sensor 301 are provided directly to the attention class selector 306. The attention class selector 306 performs some process to the sensory inputs using the probabilistic model computed in advance. A behavior controller 307 determines behavior outputs for stabilizing the controlled object 308 and supplies them to the controlled object 308. An example of the controlled object 308 is a helicopter as noted above.

It should be noted that advance learning stage is not necessary. Operation of the agent learning apparatus in such case without advance learning will be described later.

All or part of the behavior output generator 302, the behavior status evaluator 303, the selective attention mechanism 304 and the behavior controller 307 may be implemented by, for example, executing on a general purpose computer a program configured to realize functionality of them.

Features of each functional block and operation of the agent learning apparatus 100 in advance learning stage is described referring to flowcharts in Figs. 3 and 5.

External environment information is captured by a sensor 301 at given interval and converted into signals as sensory inputs $I_i(t)$ (i=1,2,...,m), which are supplied to a behavior output generator 302. The behavior output generator 302 generates behavior outputs $Q_i(t)$ corresponding to the supplied sensory inputs $I_i(t)$ and supplies them to a behavior status evaluator 303 and a controlled object 308. The transformation between the sensory inputs $I_i(t)$ and the behavior outputs $Q_i(t)$ is represented by the following mapping f.

$$f{:}I_i(t)\alpha Q_i(t) \tag{1}$$

The mapping $f$ is, for example, a non-linear approximation transformation using well-known Fourier series or the like.

In advance learning according the embodiment, the mapping $f$ corresponds to preparing random data sets which includes the mapping between sensory inputs $I_i(t)$ and behavior outputs $Q_i(t)$. In other words, the behavior output generator 302 generates behavior outputs $Q_i(t)$ one by one corresponding to each sensory input $I_i(t)$ based on these data sets (step S401 in Fig. 5).

Generated behavior outputs $Q_i(t)$ are supplied to the behavior status evaluator 303 and the controlled object 308. The controlled object 308 will work in response to the supplied behavior outputs $Q_i(t)$. The result of this work is supplied to the behavior status evaluator 303 (step S402 in Fig. 5).

The behavior status evaluator 303 then evaluates the result of this work (for example, behavior of the controlled object gets stable or not) with predetermined evaluation function and generates reward for every behavior outputs $Q_i(t)$ (step S403 in Fig. 5). Such process in the behavior status evaluator 303 is considered as reinforcement learning.

The evaluation function herein is a function that yields reward "1" if the controlled object gets stable by the supplied behavior output $Q_i(t)$ or yields reward "2" otherwise. Type of rewards may be selected in consideration of behavior characteristics of the controlled object 308 or the required control accuracy. When using the helicopter noted above, reward "1" or reward "2" is yielded according to whether the helicopter is stable or not, which may be judged on, for example, its pitching angle detected with gyro-sensor on the helicopter.

Evaluation function is used to minimize the variance σ of the behavior outputs $Q_i(t)$. In other words, by using the evaluation function, sensory inputs $I_i(t)$ unnecessary for stable control may be removed and necessary sensory inputs $I_i(t)$ are reinforced. Finally, reinforcement learning satisfying $\sigma(Q^1) < \sigma(Q^2)$ is attained. $Q^1$ is a group of the behavior outputs $Q_i(t)$ which are given reward "1" and $Q^2$ is a group of the behavior outputs $Q_i(t)$ which are given reward "2".

On receiving rewards from the behavior status evaluator 303, the selective attention mechanism 304 creates a plurality of columns 1, 2, 3,...,m in response to the type of the rewards. Then the selective attention mechanism 304 distributes the behavior outputs $Q_i(t)$ to each column (step S404 in Fig. 5). In each column, behavior outputs $Q_i(t)$ are stored by rewards, being associated with the sensory inputs $I_i(t)$ which cause that behavior outputs. More specifically, when the behavior status evaluator 303 generates either reward "1" or reward "2" for example, the selective attention mechanism 304 creates column 1 and column 2. Then the behavior outputs $Q_i(t)$ which are given reward "1" are stored in the column 1 (stable) and the behavior outputs $Q_i(t)$ which are given reward "2" are stored in the column 2 (unstable). Thus the columns 1,2,3,...,m correspond to cluster models of behavior outputs $Q_i(t)$ distributed by the rewards.

The selective attention mechanism 304 performs expectation maximization (EM) algorithm and supervised learning with neural network, both will be described later, to calculate conditional probabilistic distribution (that is, probabilistic model) $p(I_i(t)\,|\Omega_l)$ (steps S405-S408 in Fig. 4) for sensory inputs $I_i(t)$. $\Omega_l$ (1=1,2,3,...,n) is a parameter called "attention class" and corresponds to a column one by one. It should be noted that such attention class $\Omega_l$, is created under the assumption that true probabilistic distribution $p(I_i(t)|\Omega_l)$ will exist.

The attention class $\Omega_l$ is used to select noticeable sensory inputs $I_i(t)$ from among massive sensory inputs $I_i(t)$. More specifically, attention class $\Omega_l$ is a parameter used for modeling the behavior outputs $Q_i(t)$ stored in each column using the probabilistic density function of the normal distribution of behavior outputs $Q_i(t)$. Attention classes $\Omega_l$ are created as many as the number of the columns storing these behavior outputs $Q_i(t)$. Calculating the attention class $\Omega_l$ corresponding to the behavior outputs $Q_i(t)$ stored in each column is represented by the following mapping h.

$$h : Q_i(t)\alpha\Omega_l(t) \quad (2)$$

Processes in steps S405-S408 in Fig. 5 will be next described in detail. It should be noted that each process in steps S405-S408 is performed on every column.

First, Expectation Maximization algorithm (EM algorithm) in step S405 is described.

The EM algorithm is an iterative algorithm for estimating parameter θ which takes maximum likelihood when observed data is viewed as incomplete data. As noted above, since it is considered that the behavior outputs $Q_i(t)$ stored in each column appear to be the normal distribution, the parameter θ may be represented as $\theta(\mu^l,\Sigma^l)$ with mean $\mu^l$ and covariance $\Sigma^l$. EM algorithm is initiated with appropriate initial values of $\theta(\mu^l, \Sigma^l)$. Then the parameter $\theta(\mu^1, \Sigma^1)$ is updated one after another by iterating Expectation (E) step and Maximization (M) step alternately.

On the E step, conditional expected value $\varphi(\theta|\theta^{(k)})$ is calculated by following equation.

$$\varphi\left(\theta \mid \theta^{(k)}\right)=\sum_i \sum_l p\left(Q_i{}^l(t) \mid \Omega_l;\theta^{(k)}\right)\log\left(p\left(Q_i{}^l(t),\Omega_l;\theta^{(k)}\right)\right) \quad (3)$$

Then on the M step, parameters $\mu^l$ and $\Sigma^l$ for maximizing $\varphi(\theta|\theta^{(k)})$ is calculated by following equation and are set to a new estimated value $\theta^{(k+1)}$.

$$\theta^{(k+1)} = \arg\max_\theta \varphi(\theta,\theta^{(k)}) \quad (4)$$

By partial differentiating the calculated $\varphi(\theta|\theta^{(k)})$ on $\theta^{(k)}$ and letting a result equal to zero, parameters $\mu^l$ and $\Sigma^l$ may be finally calculated. More detailed explanation will be omitted because this EM algorithm is well known in the art.

Thus, behavior outputs $Q_i(t)$ stored in each column may be represented by normal distribution (step S405 in Fig. 5). Calculating $\mu^l$ and $\Sigma^l$ for the behavior outputs $Q_i(t)$ corresponds to calculating a posteriori probability for attention class $\Omega_l$.

Figs. 6 and 7 show examples of normal distribution of behavior outputs $Q_i(t)$ included in column 1 (stable) or column 2 (unstable) respectively. As is apparent from the figures, the normal distribution of column1 has shaper end of graph than that of column 2 and thus the variance of behavior outputs $Q_i(t)$ is smaller ($\sigma(Q^1)<\sigma(Q^2)$).

A priori probability $\bar{p}(Q_i^l(t)\ \Omega_1(t))$ of attention class $\Omega_l$ is calculated by following equation with the calculated parameters $\mu^l$ and $\sum^l$ (step S406 in Fig. 5).

$$\bar{p}\left(Q_i^{\,l}(t)\mid\Omega_l(t)\right)=\sum_{j=1}^{J}\frac{\alpha_{jQ_i^{\,l}(t)}}{(2\pi)^{N/2}\sqrt{\left|\Sigma_{jQ_i^{\,l}(t)}\right|}}\exp\left(-\frac{1}{2}\left(Q_i^{\,l}(t)-\mu\right)^T\sum\nolimits_{jQ_i^{\,l}(t)}^{-1}\left(Q_i^{\,l}(t)-\mu\right)\right) \quad (5)$$

where N is dimension of the behavior outputs $Q_i(t)$.

Supervised learning with neural network is described below. In this learning, conditional probabilistic density function $p(I_i(t)|\Omega_l)$ is calculated with the attention class $\Omega_l$, which has been calculated as a posteriori probability, as supervising signal (step S407 in Fig. 5).

Fig. 8 shows the exemplary structure of hierarchical neural network used for the supervised learning with neural network. This hierarchical neural network is composed of three layers of nodes. The input layer 501 corresponds to sensory inputs $I_i(t)$, middle layer 502 to behavior outputs $Q_i(t)$, and output layer 503 to attention classes $\Omega_l$, respectively. Although only three nodes are illustrated at the input layer 501 for simple illustration, there are actually as many nodes as the number of sensory inputs $I_i(t)$ in the data sets. Likewise, in the middle layer 502, behavior output nodes $Q_i(t)$ exist as many as nodes in the input layer 501. Nodes in the middle layer 502 correspond to nodes in the input layer one by one. Nodes in the output layer 503 are created as many as the number of the attention classes $\Omega_1$.

$\lambda$ shown in Fig. 8 denotes synaptic weight matrices of the hierarchical neural network. Since a probability that a behavior outputs $Q_i(t)$ belong to its each attention classes $\Omega_l$ is computed by EM algorithm, and behavior outputs $Q_i(t)$ are stored in the column in a one-to-one correspondence with sensory inputs $I_i(t)$, probabilistic relationship (that is, $\lambda$ in Fig. 8) between sensory inputs $I_i(t)$ and attention classes $\Omega_l$ are determined by repeating the supervised learning with attention class $\Omega_l$ as a teacher signal. This probabilistic relationship is conditional probabilistic density function $p(I_i(t)\ |\Omega_l)$. It should be noted that the attention class $\Omega_l$ may be calculated from sensory inputs $I_i(t)$ through synthetic mapping $h.f.$ More detailed explanation will be omitted because such hierarchical neural network is well known in the art.

With such supervised learning using neural network, conditional probabilistic density function $p(I_i(t)\ |\Omega_l)$ which is probabilistic relationship between sensory inputs $I_i(t)$ and attention class $\Omega_l$, may be computed.

As noted above, learning within the selective attention mechanism 304 on advance learning stage proceed in feed back fashion. After the conditional probabilistic density function $p(I_i(t)\ |\Omega_l)$ is calculated, the probability may be determined of which attention class $\Omega_l$ a new sensory input $I_i(t)$ belongs to without calculating the mapping $h \cdot f$ at each time for that sensory input.

Processes in steps S401 to S407 are performed on every pair of sensory input $I_i(t)$ and behavior output $Q_i(t)$ in given data sets (step S408 in Fig. 5). During the advance learning stage, conditional probabilistic distribution $p(I_i(t)\ |\Omega_l)$ continues to be updated in response to given behavior outputs $Q_i(t)$.

An explanation of how the agent learning apparatus 100 operates in advance learning stage is finished.

After the advance learning stage using the data sets is completed, the agent learning apparatus 100 starts to control the controlled object 308 based on the established learning result. Now it will be described below how the agent learning apparatus 100 operates on behavior control stage referring to Figs. 4 and 9.

In behavior control stage, a priori probability $\bar{p}(Q_i^l(t)\ |\Omega_l(t))$ for each column and conditional probabilistic distribution $p(I_i(t)|\Omega_l)$, both has been calculated in advance learning stage, are used. New sensory inputs $I_i(t)$ captured at sensor 301 are provided to the attention class selector 306 in the selective attention mechanism 304 (step S410 in Fig. 9). Then using a priori probability $\bar{p}(Q_i^l(t)\ |\Omega_l(t))$ and conditional probabilistic distribution $p(I_i(t)|\Omega_l)$, confidence $p(\Omega_l(t))$ for each attention class $\Omega_l$ is calculated by following Bayes' rule (step S411 in Fig. 9).

$$p\left(\Omega_l(t)\right)=\frac{\bar{p}\left(Q_i^{\,l}(t)\mid\Omega_l(t)\right)p\left(I_i(t)\mid\Omega_l(t)\right)}{\sum_k\bar{p}\left(Q_i^{\,l}(t)\mid\Omega_k(t)\right)p\left(I_i(t)\mid\Omega_k(t)\right)} \quad (6)$$

The confidence $p(\Omega_l(t))$ is the probability that a sensory input $I_i(t)$ belongs to each attention class $\Omega_l(t)$. Cal-

culating the probability that a sensory input $I_i(t)$ belongs to each attention class $\Omega_l(t)$ with Bayes' rule means that one attention class may be identified selectively by increasing the confidence $p(\Omega_l(t))$ with learning of Bayes' rule (weight). In other words, with selective attention mechanism 304, the attention class $\Omega_l$, or hidden control parameter, may be directly identified based on observable sensory input $I_i(t)$.

The attention class selector 306 determines that the attention class $\Omega_l$ with highest confidence $p(\Omega_l(t))$ is an attention class corresponding to the new sensory input $I_i(t)$. The determined attention class $\Omega_l$ is informed to the behavior controller 307 (step S412 in Fig. 9).

When informed attention class $\Omega_l$ is $\Omega_l$ corresponding to "stable" column, the behavior controller 307 calculates a behavior output $Q_i(t)$ corresponding to a captured sensory input $I_i(t)$ based on the behavior outputs $Q_i(t)$ stored in the column 1 (step S413 in Fig. 9), then provides it to the controlled object 308 (step S414). It should be noted that these behavior outputs $Q_i(t)$ may be calculated on the probabilistic distribution calculated by EM algorithm and not behavior outputs $Q_i(t)$ itself which was given as data sets in advance learning stage.

When informed attention class $\Omega_l$ *is* $\Omega_2$ corresponding to "unstable" column, the behavior controller 307 selects not column 2 but column 1 having smaller variance, and calculates a behavior output $Q_i(t)$ corresponding to a captured sensory input $I_i(t)$ based on the behavior outputs $Q_i(t)$ stored in column 1, then provides it to the controlled object 308 (S414). If no corresponding behavior output is stored, last behavior output is supplied. If no behavior output $Q_i(t)$ associated with the sensory input $I_i(t)$ is stored in the column, previous behavior output $Q_i(t)$ is selected and provided to the controlled object 308. By repeating such process, relation between variance of columns $\sigma(Q^1)<\sigma(Q^2)$ is accomplished (that is, variance of behavior outputs in column 1 gets smaller rapidly and the stability of controlled object 308 is attained).

Alternatively, when supplied attention class $\Omega_1$ is $\Omega_2$ which corresponds to "unstable", the behavior controller 307 may select column 2, calculate behavior outputs $Q_i(t)$ corresponding to captured sensory inputs $I_i(t)$ from among behavior outputs $Q_i(t)$ stored in column 2 having smaller variance, and supply them to the controlled object 308.

The controlled object 308 exhibits behavior according to the provided behavior output $Q_i(t)$. The result of this behavior is provided to the behavior status evaluator 303 again. Then, when new sensory input $I_i(t)$ is captured by sensor 301, attention class is selected using conditional probability density function $p(I_i(t)|\Omega_l)$ based on learning by Bayes' rule. After that, processes described above are repeated (S415).

An explanation of how the agent learning apparatus 100 operates in behavior control stage is finished.

In this embodiment, since conditional probabilistic density function $p(I_i(t)\ |\Omega_l)$ is calculated in the advance learning stage, the attention class $\Omega_l$ may be directly selected corresponding to new sensory input $I_i(t)$ using statistical learning in behavior control stage without computing mapping *f* and *h.*

Generally, the information amount of sensory inputs $I_i(t)$ from the sensor 301 is enormous. Therefore, if mapping *f* and *h* are calculated for all sensory inputs $I_i(t)$, its computing amount far exceeds the processing capacity of the typical computer. Thus, according to the invention, appropriate filtering for sensory inputs $I_i(t)$ with the attention classes $\Omega_l$ may improve the efficiency of the learning.

In addition, selecting attention class $\Omega_l$ with highest confidence $p(\Omega_l(t))$ corresponds to selecting column which includes behavior output $Q_i(t)$ with highest reward for a sensory input $I_i(t)$.

Learning process is performed three times in this embodiment. That is, 1) reinforcement learning in the behavior status evaluator 303 (in other words, generation of cluster models by rewards), 2) learning of the relationship between attention classes $\Omega_l$ and sensory inputs $I_i(t)$ using the hierarchical neural network, and 3) selection of attention class corresponding to new sensory input $I_i(t)$ with Bayes' rule. Thus, the agent learning apparatus 100 according to the invention is characterized in that supervised learning scheme and statistical learning scheme are synthetically applied.

In conventional supervised learning scheme, optimal control given by an operator is learned by a control system, but this is not practical as noted above. In conventional reinforcement learning scheme, optimal control is acquired through try and error process of a control system, but this takes much processing time.

In contrast, the agent learning apparatus 100 according to the invention can select the attention class with the selective attention mechanism 304 and learn the important sensory inputs $I_i(t)$ selectively, resulting to reduce the processing time and to eliminate the need of the supervising information given by an operator. Furthermore, if the motion of the controlled object 308 has non-linear characteristics, it takes much time for learning with only the reinforcement learning scheme because complicated non-linear function approximation is required. On the other hand, since the agent learning apparatus 100 of the invention learns the sensory inputs according to their importance with the selective attention mechanism 304, the processing speed is improved. The agent learning apparatus 100 is also characterized in that feed back control is performed in advance learning stage and feed forward control is performed in behavior control stage.

Now referring to Fig. 10, one example of the invention is described in detail. Fig. 10 shows a schematic view of a control system for a radio-controlled helicopter 601 applying an agent learning apparatus 100 of the invention.

Mounted on a helicopter 601 is a vision sensor 602, which captures visual information every 30-90 milliseconds and sends them to a computer 603 as sensory inputs $I_i(t)$. The computer 603 is programmed to implement the agent learning apparatus 100 shown in Fig. 3 or Fig. 4 and generates behavior outputs $Q_i(t)$ for the sensory inputs $I_i(t)$ according to the invention. The behavior outputs $Q_i(t)$ are sent to a motor control unit 605 mounted on the helicopter 601 via a radio transmitter 604, rotating a rotor on the helicopter.

In this example, the number of the attention classes $\Omega_1$ is set at two. Total 360 data sets for advance learning were used for processing in selective attention mechanism 304. After the advance learning was over, it was confirmed whether the system could select correct attention class $\Omega_l$ when another 150 test data (new sensory inputs $I_i(t)$) were provided to the system.

In advance learning stage, two types of rewards (positive rewards and negative rewards) are assigned to behavior outputs $Q_i(t)$. The selective attention mechanism 304 distributes the behavior outputs $Q_i(t)$ to column 1 or column 2 according to their rewards. This process is represented by the following evaluation function.

If $|\tilde{Q}_i - Q_i| \leq \delta$ then $Q_i^1 \Leftarrow Q_i$(Positive) else $Q_i^2 \Leftarrow Q_i$ (Negative) where $Q^1$ or $Q^2$ representes a group of behavior outputs $Q_i(t)$ distributed to column 1 or column2 respectively. In this case, the positive reward corresponds to column 1 and the negative reward correspond to column 2. $Q_i$ denotes the behavior output $Q_i(t)$ to keep the helicopter stable. $Q_i$ is a mean value of a probabilistic distribution $p(Q_i)$ and set to "82" in this example. $\delta$ is a threshold that represents a tolerance of stability and set to "1.0" in this example. The evaluation function shown above acts as reinforcement learning satisfying the relation between the variances of column $\sigma(Q^1)<\sigma(Q^2)$.

Figs. 11A to 11C show the relationship between the sensory inputs $I_i(t)$ and the attention class $\Omega_l$, which was acquired from the experiment using the system in Fig. 10. It should be noted that the actual attention class could be calculated by the data sets. Fig. 11A is a diagram of the correct attention class $\Omega_l$ corresponding to sensory inputs $I_i(t)$. Fig. 11B is a diagram of the experiment result when the iteration number is small (early stage) in the EM algorithm. Fig. 11C is a diagram of the experiment result when the iteration number is sufficient (late stage). Solid lines in each figure represent that the attention class $\Omega_l$ selected at its time point is shifted from one to another. In other words, during time steps where no solid line is shown in each figure, same attention class $\Omega_l$ keeps on being selected corresponding to either column 1 or column 2. It is apparent that the diagram in late stage (Fig. 11C) is similar to the diagram of actual attention class (Fig. 11A) than that in early stage (Fig. 11B).

These results prove that the agent learning apparatus 100 according to the invention can learn the predictive relationship between the sensory inputs $I_i(t)$ and the two attention classes $\Omega_l$. In other words, the result suggests that the discriminative power of the prediction between sensory inputs $I_i(t)$ and two attention classes is "weak" when the probabilistic distribution for statistical column is in early stage of EM algorithm. As the iteration number in the EM algorithm is increased, the accuracy of the prediction is improved. The discriminative power of the prediction may be affected by the number of the normal distribution (Gaussian function) used in the EM algorithm. Although single Gaussian function is used in the aforementioned embodiments, mixture of Gaussian functions may be used in the EM algorithm to improve the discriminative power of the prediction.

Fig. 12 shows a graph of the minimum variance value of the behavior outputs $Q_i(t)$ over time when the helicopter 601 in the example is controlled. A dashed line represents the result when the helicopter 601 is controlled by the conventional feedback control, while a solid line represents the result when the helicopter 601 is controlled by the agent learning apparatus 100 according to the invention. The conventional methods have no learning process by the selective attention mechanism 304. Therefore, since it is learned through try and error process which visual information (that is, sensory inputs $I_i(t)$) are needed for stabilizing the helicopter 601 among sensory inputs $I_i(t)$ captured by the helicopter 601, it takes much time until the variance becomes small, in other words, the helicopter 601 gets stabilized.

In contrast, the agent learning apparatus 100 according to the invention acquires the sensory inputs $I_i(t)$ needed for stabilizing the helicopter 601 not through try and error process but by the learning according to the importance of the sensory inputs $I_i(t)$ using the selective attention mechanism 304. Therefore, minimization of the variance of the behavior outputs $Q_i(t)$ may be attained very rapidly.

Although the vision sensor 602 is used in this example, sensory inputs $I_i(t)$ is not limited to vision information but other input such as auditory information or tactile information may be also used. In addition, the example has been described for two columns and two rewards, but three or more columns and rewards may be used. Only one column will not accelerate the convergence of the learning because, if there is only one column, it will take much time until the normal distribution curve of behavior outputs $Q_i(t)$ contained in the column is sharpened and the variance gets small. One feature of the invention is that the normal distribution curve of behavior outputs $Q_i(t)$ is sharpened rapidly by generating a plurality of columns. The more columns are used, the more complicated and various behavior outputs may be obtained.

In embodiments described above, a priori learning using data sets is performed. Such a priori learning is for stabilizing the controlled object 308 more rapidly. However, control for controlled object 308 (for example, a helicopter 601) may be started by applying the agent learning apparatus 100 without a priori learning. In this case, the behavior controller 307 supplies behavior outputs $Q_i(t)$ to the controlled object 308 in a random fashion irrespective of sensory inputs $I_i(t)$ captured by the sensor because no probabilistic model described above is created during short period after control is started. The behavior status evaluator 303 supplies rewards to behavior results of the controlled object 308. The selective attention mechanism distributes behavior outputs $Q_i(t)$ to columns in association with sensory inputs $I_i(t)$ according to the reward. Then, relationship between sensory inputs $I_i(t)$ and behavior outputs $Q_i(t)$ is stored in columns according to rewards and normal distributions for behavior outputs stored in columns may be computed with EM algorithm, a priori probability $\bar{p}(Q_i^l(t)|\Omega_l(t))$ and conditional probability density function $p(I_i(t)|\Omega_l)$ may be computed according to processes described above. These values are applied to Bayes' rule to calculate confidence $p(\Omega_l(t))$ for each attention class. The behavior controller 307 computes behavior output $Q_i(t)$ corresponding to newly-captured sensory input $I_i(t)$ based on column where confidence $p(\Omega_l(t))$ is maximum or where behavior outputs having best reward are stored and supply them to controlled object. Again, the behavior status evaluator supplies rewards to behavior results of the controlled object 308 and the computed behavior outputs $Q_i(t)$ are stored in one of columns. Based on this, a priori probability $\bar{p}(Q_i^l(t)\ \Omega_l(t))$ and conditional probability density function $p(I_i(t)|\Omega_l)$ may be updated. Then, these updated probabilities are applied to Bayes' rule and new behavior output $Q_i(t)$ is output. In this way, without advance learning, a priori probability $\bar{p}(Q_i^l(t)\ |\Omega_l(t))$ and conditional probability density function $p(I_i(t)|\Omega_l)$ are updated one after another. In this case, the instability of controlled object is large when at the beginning of starting the control and the controlled object may be damaged or so by unexpected motion of the object. Therefore, range of behavior output $Q_i(t)$ given to the controlled object 308 by the behavior controller 307 is preferably limited forcefully until the predetermined number of the relationship between sensory inputs and behavior outputs are gained (alternatively, until predetermined period is lapsed).

Furthermore, well-known competitive learning or learning with self-organized network may be employed instead of EM algorithm in step S405. Well-known belief network or graphical model may be employed instead of Bayes' rule in step S411.

Industrial Applicability

As described above, according to the invention, variance of behavior outputs $Q_i(t)$ may be minimized rapidly to stabilize a controlled object by computing the behavior output based on a column which is estimated as stable.

## Claims

**1.** An agent learning apparatus (100) for performing optimal control for a controlled object, comprising:

a sensor (301) for capturing external environmental information for conversion to sensory inputs;
a behavior controller (302,307) for supplying behavior outputs to said controlled object based on results of learning performed on said sensory inputs;
a behavior status evaluator (303) for evaluating behavior of the controlled object caused by said behavior outputs; and
a selective attention mechanism (304) for storing said behavior outputs in one of a plurality of columns in association with corresponding sensory inputs based on the evaluation, computing probabilistic models based on the behavior outputs stored in said columns, and outputting, as said results of learning, behavior outputs in association with newly given sensory inputs in the column, said column having largest confidence calculated by applying said newly given sensory inputs to said probabilistic models.

**2.** An agent learning apparatus (100) for performing optimal control for a controlled object, comprising:

a sensor (301) for capturing external environmental information for conversion to sensory inputs;
a behavior controller (302,307) for supplying behavior outputs to said controlled object based on results of learning performed on said sensory inputs;
a behavior status evaluator (303) for evaluating behavior of the controlled object caused by said behavior outputs; and
a selective attention mechanism (304) for storing said behavior outputs in one of a plurality of columns in association with corresponding sensory inputs based on the evaluation, computing probabilistic models based on the behavior outputs stored in said columns, and outputting, as said results of learning, behavior outputs in association with newly given sensory inputs in the column, said column containing the behavior outputs having largest evaluation.

**3.** The agent learning apparatus (100) of claim 1 or 2, said computing probabilistic model comprising:

representing behavior outputs stored in columns as normal distribution by using Expectation Maximization algorithm;
using said normal distribution to compute a priori probability that a behavior output is contained in each column; and
using said a priori probability to compute said probabilistic model by supervised learning with neural network, said probabilistic model being probabilistic relationship between any sensory input and each column.

**4.** The agent learning apparatus (100) of claim 3, said confidence being calculated by applying said a priori probability and said probabilistic model to Bayes' rule.

**5.** The agent learning apparatus (100) of claim 4, wherein said probabilistic model is computed in advance using data sets of relationship between sensory inputs and behavior outputs, wherein after computing said probabilistic model, said confidence is calculated using the probabilistic model for newly given sensory inputs.

**6.** An agent learning method for performing optimal control for a controlled object, comprising:

capturing external environmental information for conversion to sensory inputs;
supplying behavior outputs to said controlled object based on results of learning performed on said sensory inputs;
evaluating behavior of the controlled object caused by said behavior outputs;
storing said behavior outputs in one of a plurality of columns in association with corresponding sensory inputs based on the evaluation;
computing probabilistic models based on the behavior outputs stored in said columns; and
outputting, as said results of learning, behavior outputs in association with newly given sensory inputs in the column, said column having largest confidence calculated by applying said newly given sensory inputs to said probabilistic models.

**7.** An agent learning method for performing optimal control for a controlled object, comprising:

capturing external environmental information for conversion to sensory inputs;
supplying behavior outputs to said controlled object based on results of learning performed on said sensory inputs;
evaluating behavior of the controlled object caused by said behavior outputs;
storing said behavior outputs in one of a plurality of columns in association with corresponding sensory inputs based on the evaluation;
computing probabilistic models based on the behavior outputs stored in said columns; and
outputting, as said results of learning, behavior outputs in association with newly given sensory inputs in the column, said column containing the behavior outputs having largest evaluation.

**8.** The agent learning method of claim 6 or 7, said computing probabilistic model comprising:

representing behavior outputs stored in columns as normal distribution by using Expectation Maximization algorithm;
using said normal distribution to compute a priori probability that a behavior output is contained in each column; and
using said a priori probability to compute said probabilistic model by supervised learning with neural network, said probabilistic model being probabilistic relationship between any sensory input and each column.

**9.** The agent learning method of claim 8, said confidence being calculated by applying said a priori probability and said probabilistic model to Bayes' rule.

**10.** The agent learning method of claim 9, wherein said probabilistic model is computed in advance using data sets of relationship between sensory inputs and behavior outputs, wherein after computing said probabilistic model, said confidence is calculated using the probabilistic model for newly given sensory inputs.

**11.** An agent learning program for performing optimal control for a controlled object, comprising:

capturing external environmental information for conversion to sensory inputs;

supplying behavior outputs to said controlled object based on results of learning performed on said sensory inputs;
evaluating behavior of the controlled object caused by said behavior outputs;
storing said behavior outputs in one of a plurality of columns in association with corresponding sensory inputs based on the evaluation;
computing probabilistic models based on the behavior outputs stored in said columns; and
outputting, as said results of learning, behavior outputs in association with newly given sensory inputs in the column, said column having largest confidence calculated by applying said newly given sensory inputs to said probabilistic models.

**12.** An agent learning program for performing optimal control for a controlled object, comprising:

capturing external environmental information for conversion to sensory inputs;
supplying behavior outputs to said controlled object based on results of learning performed on said sensory inputs;
evaluating behavior of the controlled object caused by said behavior outputs;
storing said behavior outputs in one of a plurality of columns in association with corresponding sensory inputs based on the evaluation;
computing probabilistic models based on the behavior outputs stored in said columns; and
outputting, as said results of learning, behavior outputs in association with newly given sensory inputs in the column, said column containing the behavior outputs having largest evaluation.

**13.** The agent learning program of claim 11 or 12, said computing probabilistic model comprising:

representing behavior outputs stored in columns as normal distribution by using Expectation Maximization algorithm;
using said normal distribution to compute a priori probability that a behavior output is contained in each column; and
using said a priori probability to compute said probabilistic model by supervised learning with neural network, said probabilistic model being probabilistic relationship between any sensory input and each column.

**14.** The agent learning program of claim 13, said confidence being calculated by applying said a priori probability and said probabilistic model to Bayes' rule.

**15.** The agent learning program of claim 14, wherein said probabilistic model is computed in advance using data sets of relationship between sensory inputs and behavior outputs, wherein after computing said probabilistic model, said confidence is calculated using the probabilistic model for newly given sensory inputs.

FIG. 1

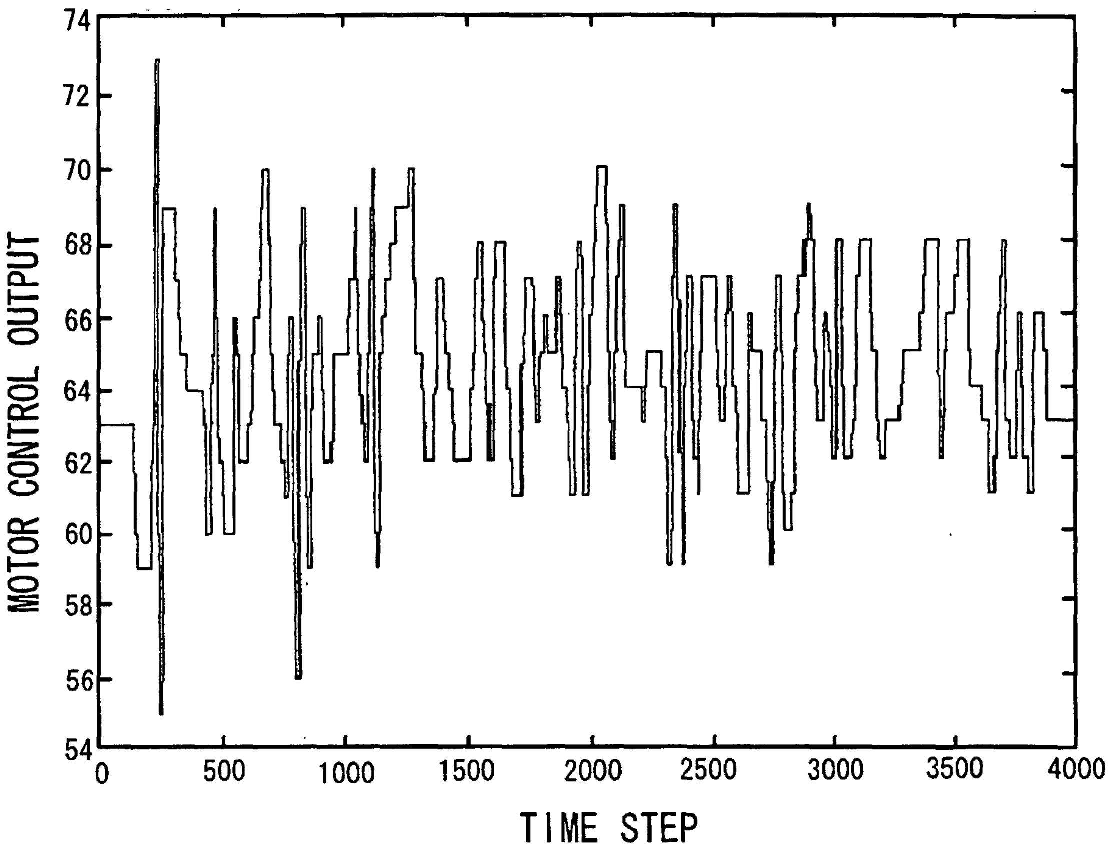
74
72
70
68
66
64
62
60
58
56
54
MOTOR CONTROL OUTPUT
0
500
1000
1500
2000
2500
3000
3500
4000
TIME STEP

FIG. 2

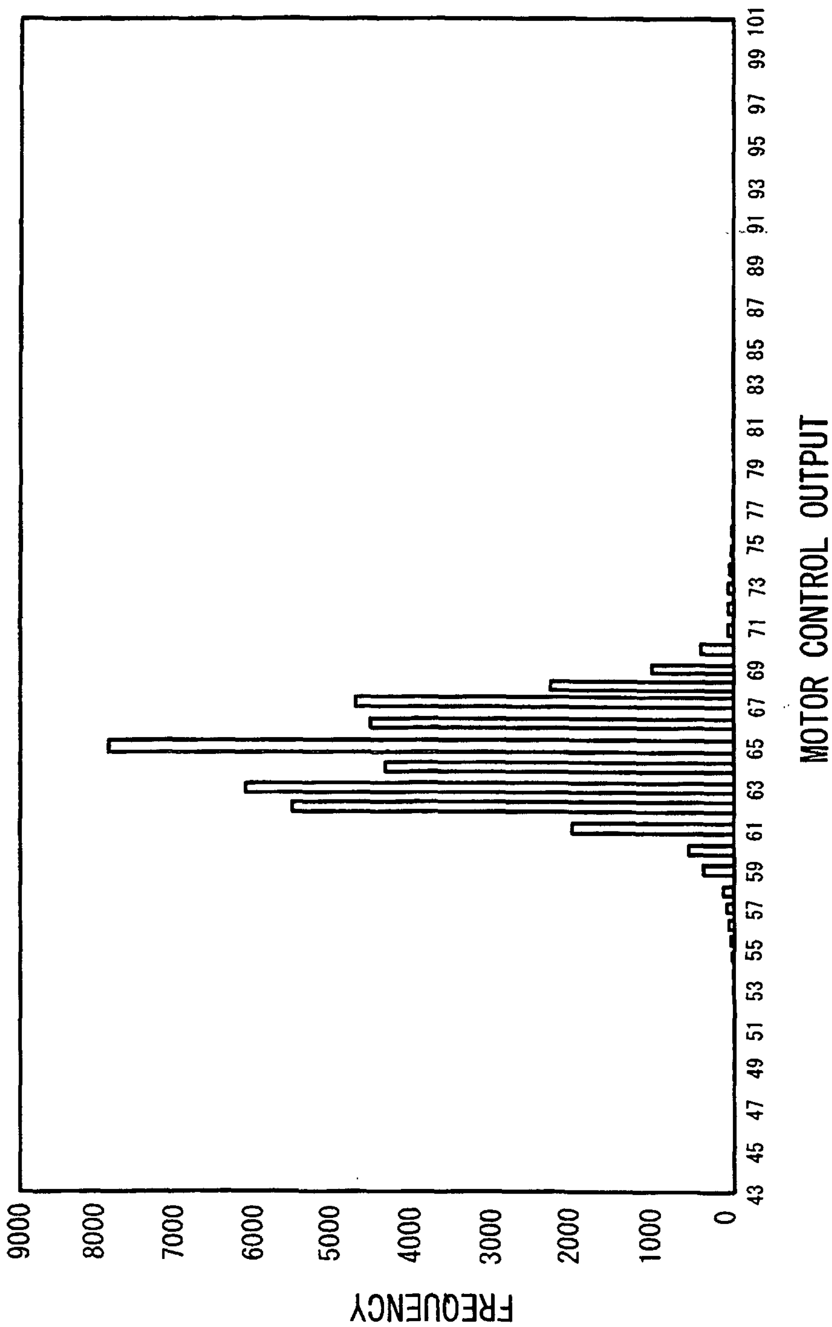
FREQUENCY
9000
8000
7000
6000
5000
4000
3000
2000
1000
0
43
45
47
49
51
53
55
57
59
61
63
65
67
69
71
73
75
77
79
81
83
85
87
89
91
93
95
97
99
101
MOTOR CONTROL OUTPUT

FIG. 3

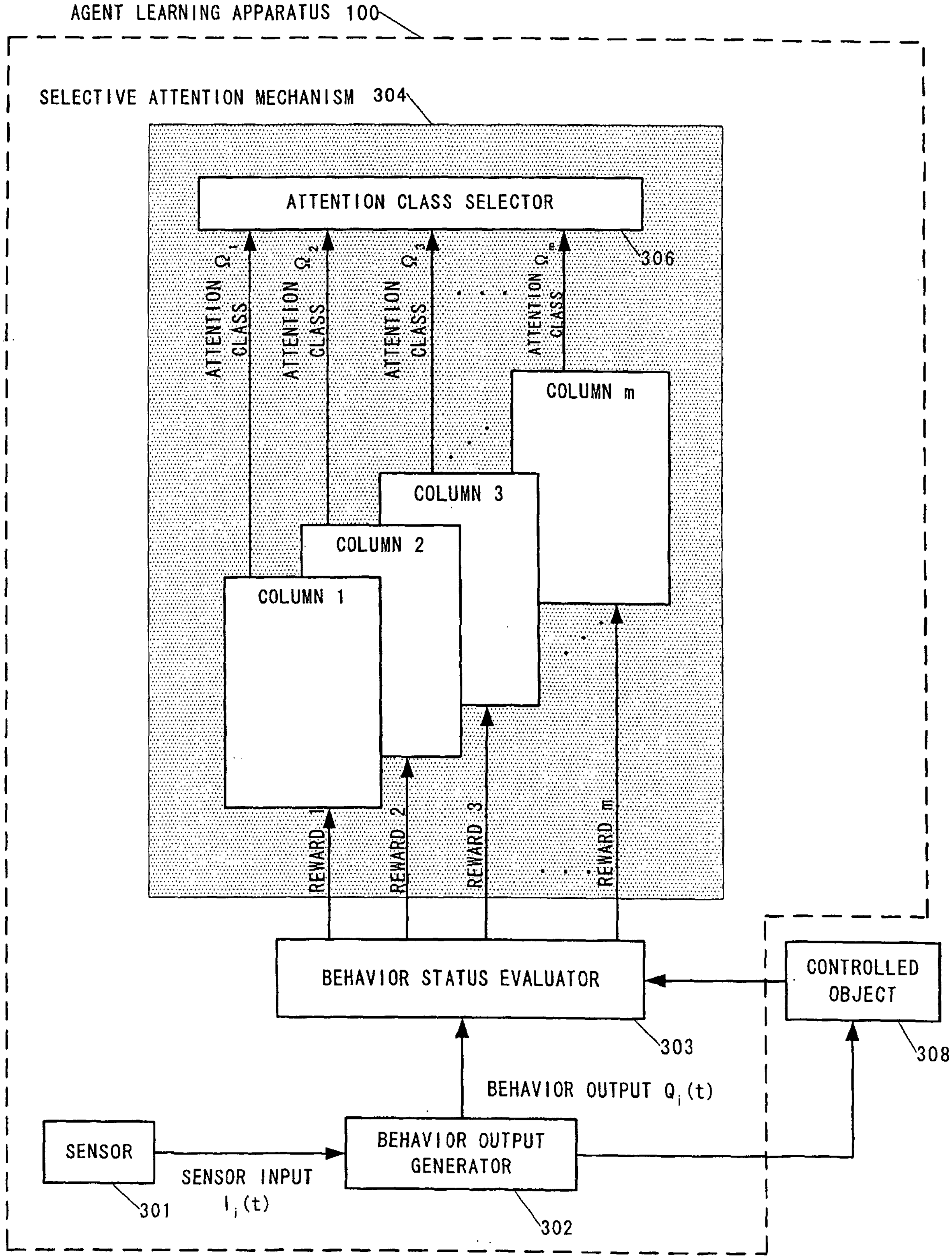
AGENT LEARNING APPARATUS 100
SELECTIVE ATTENTION MECHANISM 304
ATTENTION CLASS SELECTOR
306
ATTENTION CLASS Ω1
ATTENTION CLASS Ω2
ATTENTION CLASS Ω3
ATTENTION CLASS Ωm
COLUMN m
COLUMN 3
COLUMN 2
COLUMN 1
REWARD 1
REWARD 2
REWARD 3
REWARD m
BEHAVIOR STATUS EVALUATOR
303
CONTROLLED OBJECT
308
BEHAVIOR OUTPUT Qi(t)
SENSOR
301
SENSOR INPUT Ii(t)
BEHAVIOR OUTPUT GENERATOR
302

FIG. 4

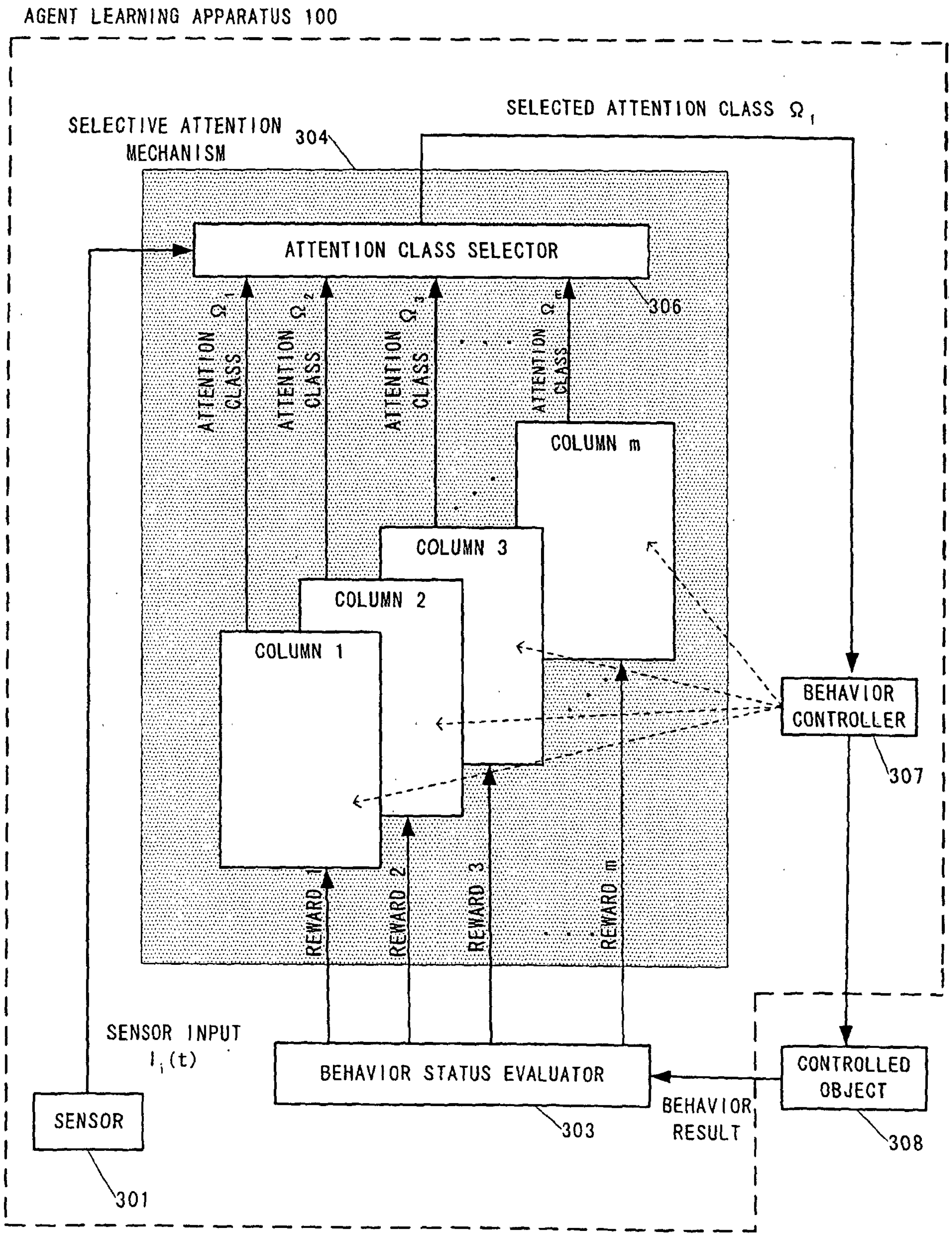
AGENT LEARNING APPARATUS 100
SELECTIVE ATTENTION MECHANISM
304
SELECTED ATTENTION CLASS Ω i
ATTENTION CLASS SELECTOR
306
ATTENTION CLASS Ω 1
ATTENTION CLASS Ω 2
ATTENTION CLASS Ω 3
ATTENTION CLASS Ω m
COLUMN m
COLUMN 3
COLUMN 2
COLUMN 1
BEHAVIOR CONTROLLER
307
REWARD 1
REWARD 2
REWARD 3
REWARD m
SENSOR INPUT
I i (t)
BEHAVIOR STATUS EVALUATOR
CONTROLLED OBJECT
BEHAVIOR RESULT
303
308
SENSOR
301

FIG. 5

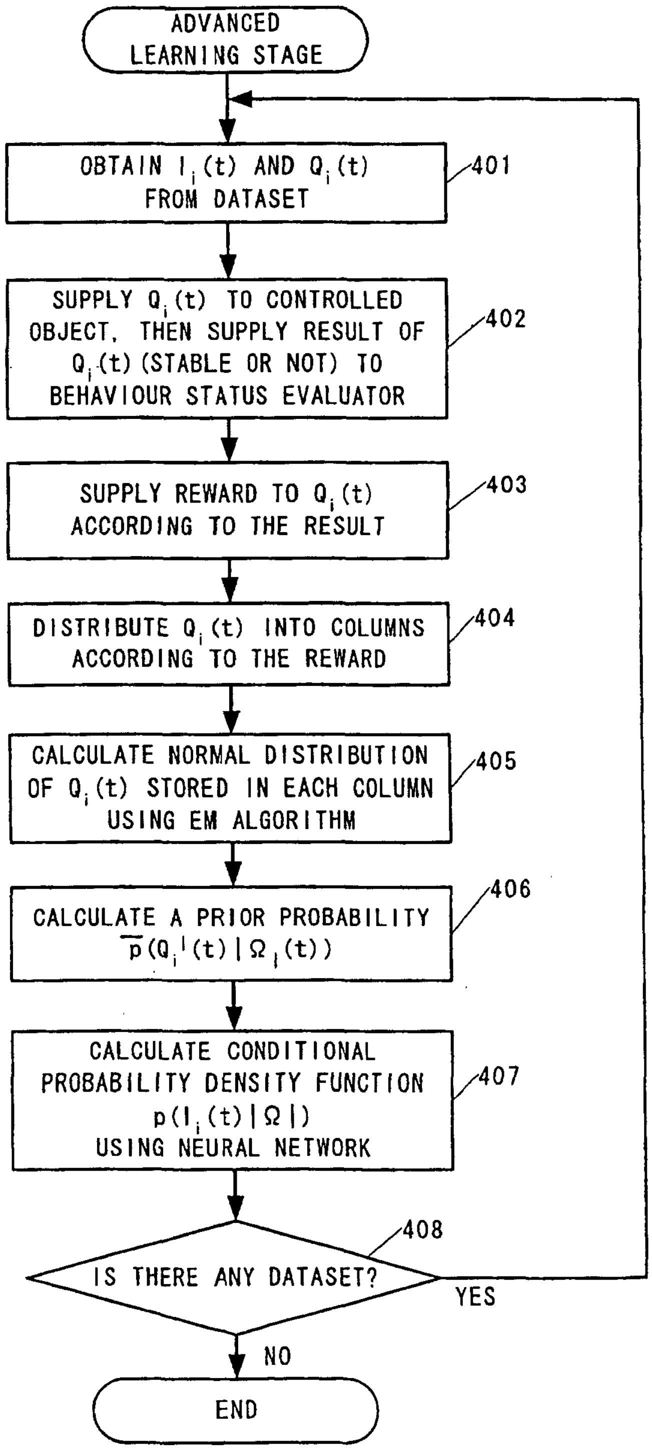
ADVANCED LEARNING STAGE
OBTAIN $I_i(t)$ AND $Q_i(t)$ FROM DATASET
401
SUPPLY $Q_i(t)$ TO CONTROLLED OBJECT, THEN SUPPLY RESULT OF $Q_i(t)$ (STABLE OR NOT) TO BEHAVIOUR STATUS EVALUATOR
402
SUPPLY REWARD TO $Q_i(t)$ ACCORDING TO THE RESULT
403
DISTRIBUTE $Q_i(t)$ INTO COLUMNS ACCORDING TO THE REWARD
404
CALCULATE NORMAL DISTRIBUTION OF $Q_i(t)$ STORED IN EACH COLUMN USING EM ALGORITHM
405
CALCULATE A PRIOR PROBABILITY $\overline{p}(Q_i{}^l(t) \mid \Omega_l(t))$
406
CALCULATE CONDITIONAL PROBABILITY DENSITY FUNCTION $p(I_i(t) \mid \Omega_l)$ USING NEURAL NETWORK
407
IS THERE ANY DATASET?
408
YES
NO
END

FIG. 6

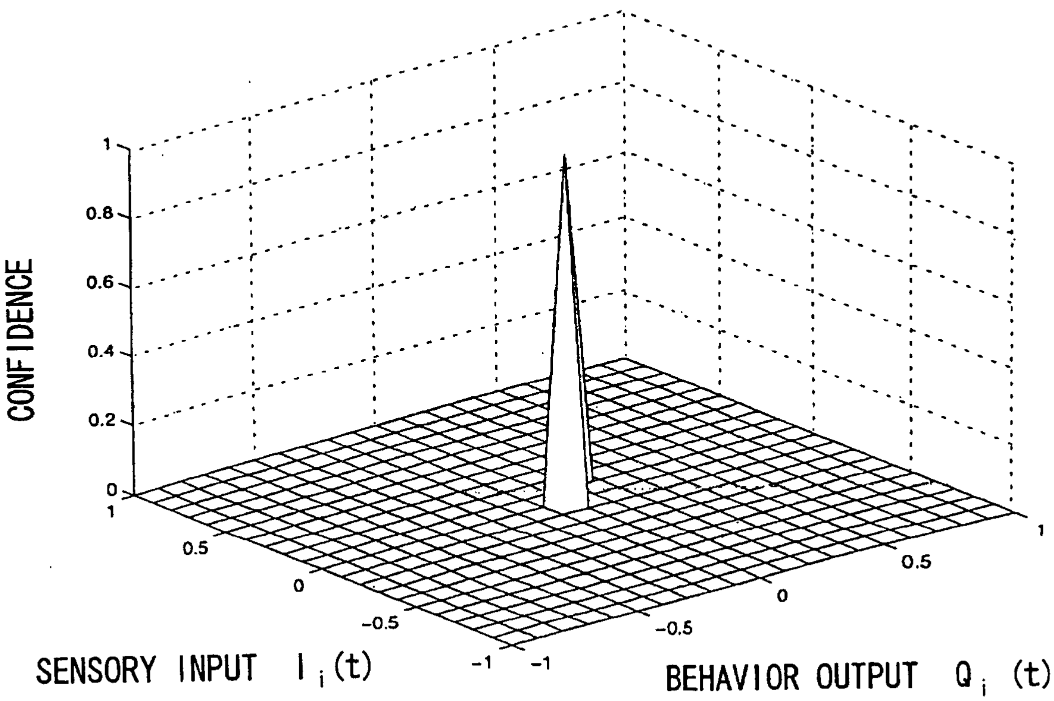
CONFIDENCE
1
0.8
0.6
0.4
0.2
0
1
0.5
0
-0.5
-1
SENSORY INPUT I i (t)
-1
-0.5
0
0.5
1
BEHAVIOR OUTPUT Q i (t)

FIG. 7

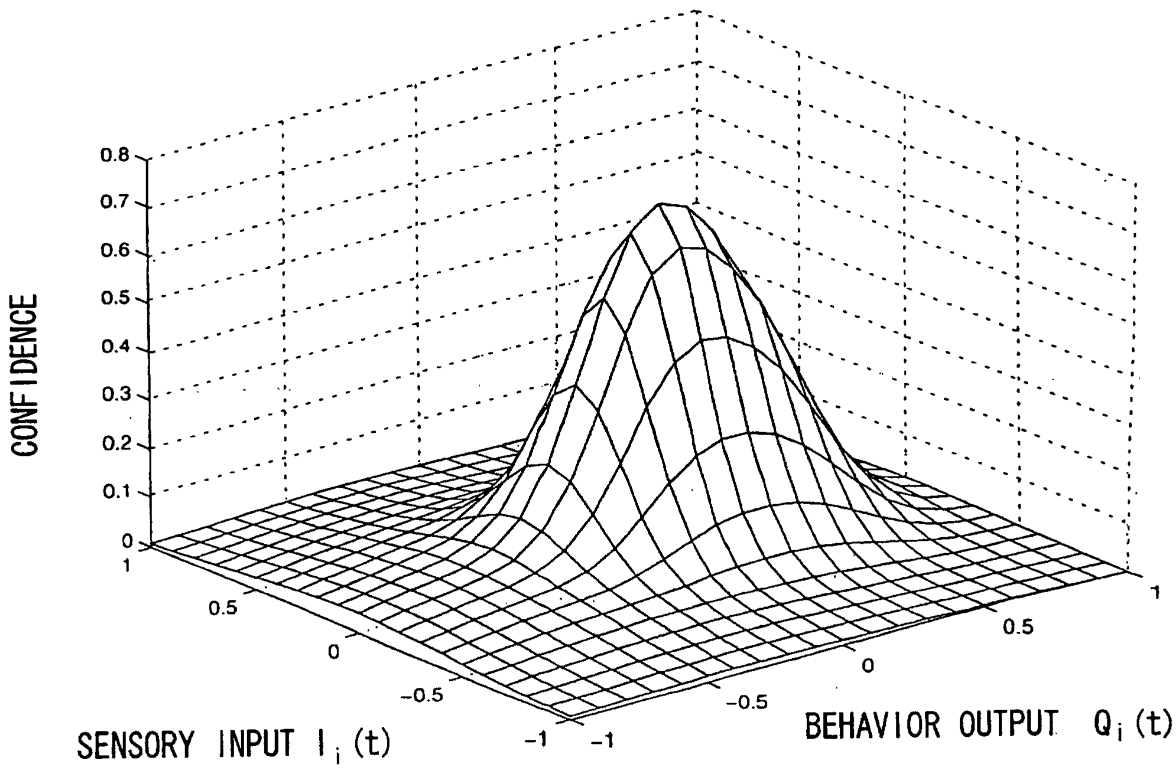
CONFIDENCE
0.8
0.7
0.6
0.5
0.4
0.3
0.2
0.1
0
1
0.5
0
−0.5
−1
SENSORY INPUT $I_i(t)$
−1
−0.5
0
0.5
1
BEHAVIOR OUTPUT $Q_i(t)$

FIG. 8

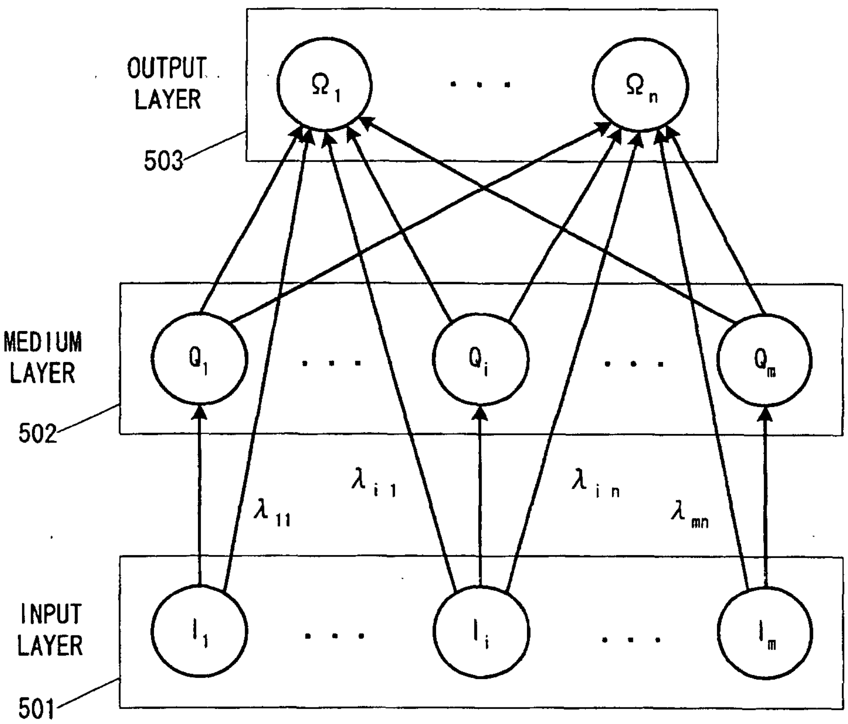
OUTPUT LAYER
503
Ω1
Ωn
MEDIUM LAYER
502
Q1
Qi
Qm
λ11
λi1
λin
λmn
INPUT LAYER
501
I1
Ii
Im

FIG. 9

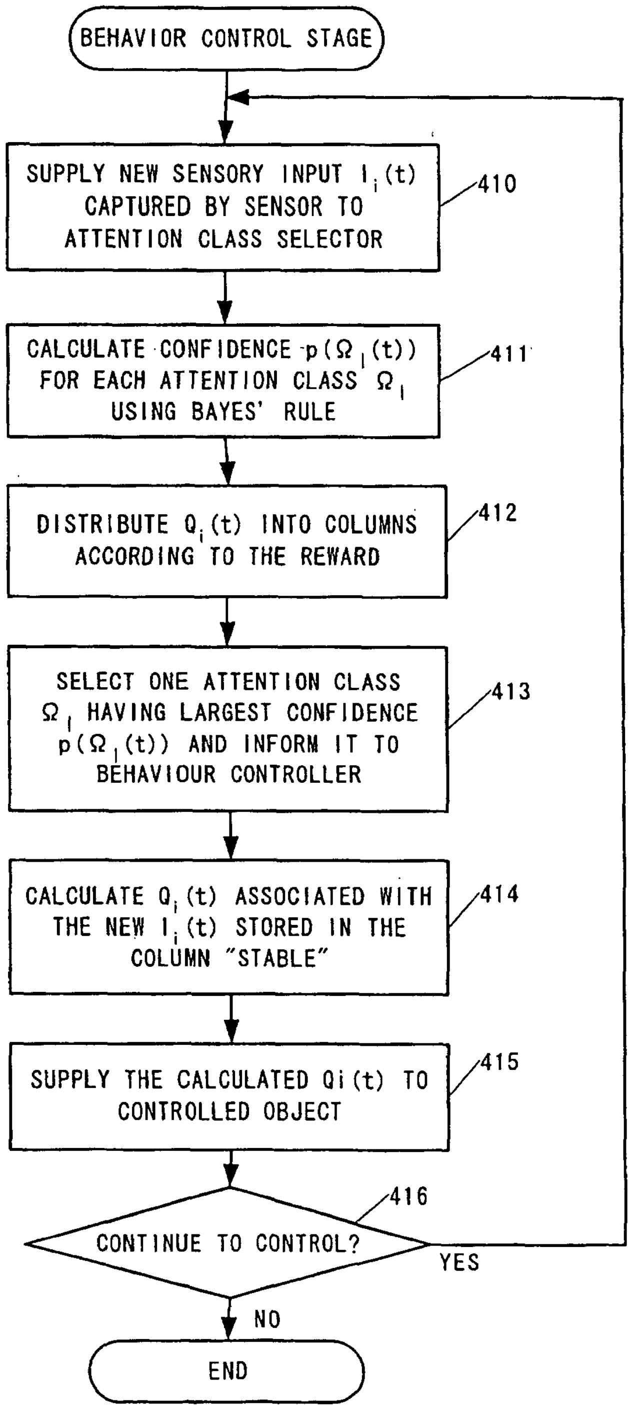
BEHAVIOR CONTROL STAGE
SUPPLY NEW SENSORY INPUT $I_i(t)$ CAPTURED BY SENSOR TO ATTENTION CLASS SELECTOR
410
CALCULATE CONFIDENCE $p(\Omega_l(t))$ FOR EACH ATTENTION CLASS $\Omega_l$ USING BAYES' RULE
411
DISTRIBUTE $Q_i(t)$ INTO COLUMNS ACCORDING TO THE REWARD
412
SELECT ONE ATTENTION CLASS $\Omega_l$ HAVING LARGEST CONFIDENCE $p(\Omega_l(t))$ AND INFORM IT TO BEHAVIOUR CONTROLLER
413
CALCULATE $Q_i(t)$ ASSOCIATED WITH THE NEW $I_i(t)$ STORED IN THE COLUMN "STABLE"
414
SUPPLY THE CALCULATED Qi(t) TO CONTROLLED OBJECT
415
CONTINUE TO CONTROL?
416
YES
NO
END

FIG. 10

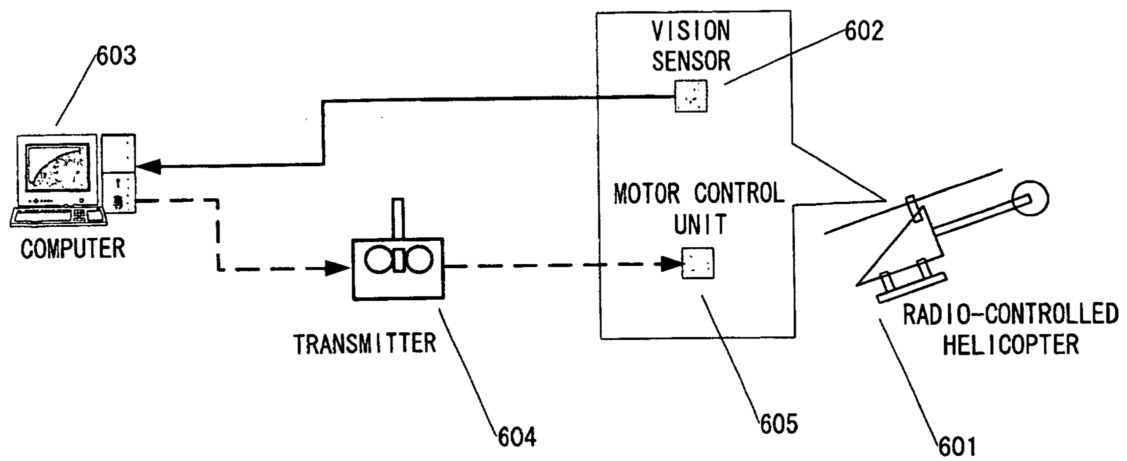
603
COMPUTER
VISION
SENSOR
602
MOTOR CONTROL
UNIT
TRANSMITTER
604
605
RADIO-CONTROLLED
HELICOPTER
601

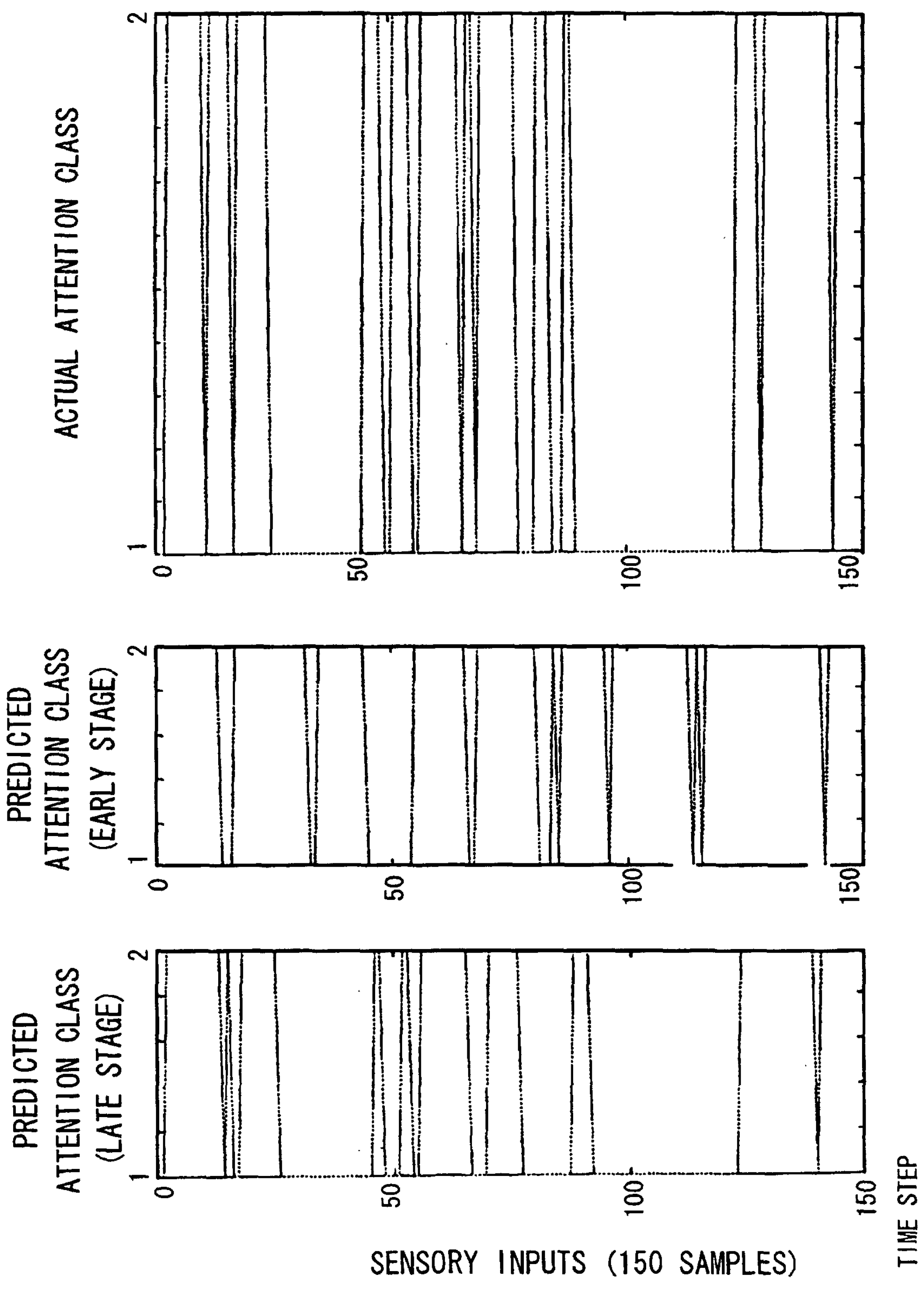


FIG. 11A

FIG. 11B

FIG. 11C

FIG. 12

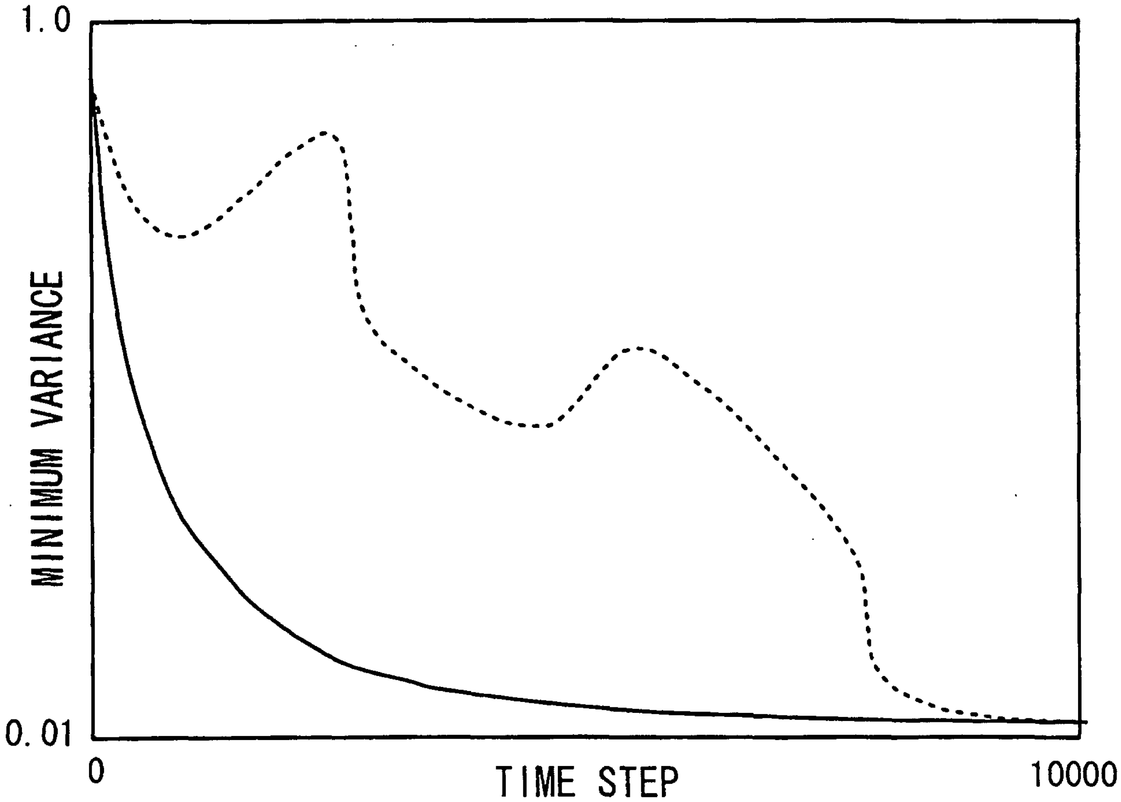

# INTERNATIONAL SEARCH REPORT

International application No.
PCT/JP02/00878

A. CLASSIFICATION OF SUBJECT MATTER
Int.Cl$^7$ G05B13/02, G06N1/00, G06N3/00

According to International Patent Classification (IPC) or to both national classification and IPC

B. FIELDS SEARCHED

Minimum documentation searched (classification system followed by classification symbols)
Int.Cl$^7$ G05B13/02, G06N1/00, G06N3/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2002 |
| Kokai Jitsuyo Shinan Koho | 1971-2002 | Toroku Jitsuyo Shinan Koho | 1994-2002 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2-308301 A (Hitachi, Ltd.), 21 December, 1990 (21.12.90), Page 2, lower right column, line 7 to page 3, upper right column, line 8 (Family: none) | 1,2,6,7, 11,12 |
| Y | JP 2000-35956 A (Japan Science and Technology Corp., Kenji DOYA, Mitsuo KAWAHITO), 02 February, 2000 (02.02.00), Par. Nos. [0016] to [0024] & WO 00/04457 A1 & EP 1016981 A1 | 1,2,6,7, 11,12 |
| A | JP 2-306364 A (NKK Corp.), 19 December, 1990 (19.12.90), Page 3, upper left column, line 10 to page 4, upper left column, line 5 (Family: none) | 1-15 |

[X] Further documents are listed in the continuation of Box C. [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>26 April, 2002 (26.04.02) | Date of mailing of the international search report<br>21 May, 2002 (21.05.02) |
| Name and mailing address of the ISA/<br>Japanese Patent Office | Authorized officer |
| Facsimile No. | Telephone No. |

Form PCT/ISA/210 (second sheet) (July 1998)

**INTERNATIONAL SEARCH REPORT**

International application No.
PCT/JP02/00878

C (Continuation). DOCUMENTS CONSIDERED TO BE RELEVANT

| Category* | Citation of document, with indication, where appropriate, of the relevant passages | Relevant to claim No. |
|---|---|---|
| A | JP 5-204650 A (Omron Corp.), 13 May, 1993 (13.05.93), Par. Nos. [0039] to [0051] (Family: none) | 1-15 |
| A | JP 3-260704 A (Kobe Steel, Ltd.), 20 November, 1991 (20.11.91), Page 7, lower left column, line 7 to page 10, upper right column, line 3 & US 5193066 A & KR 9307378 A | 1-15 |
| A | JP 5-265511 A (Hitachi, Ltd.), 15 October, 1993 (15.10.93) All pages (Family: none) | 1-15 |
| A | JP 4-360238 A (Omron Corp.), 14 December, 1992 (14.12.92), All pages (Family: none) | 1-15 |

Form PCT/ISA/210 (continuation of second sheet) (July 1998)